# EUROPEAN PATENT SPECIFICATION

(11) **EP 3 086 084 B1**
(45) Date of publication and mention of the grant of the patent: **09.12.2020**
(21) Application number: 16166444.6
(22) Date of filing: 21.04.2016
(51) Int. Cl.: G01B 11/24, B23K 26/082, F02C 7/045, B23K 26/38, B23K 26/382, B23K 26/03, B23K 26/08, B23K 103/16

(54) **MACHINING A FREELY ARRANGED COMPOSITE PART USING A LASER SYSTEM**
BEARBEITUNG EINES FREI ANGEORDNETEN VERBUNDTEILS MITHILFE EINES LASERSYSTEMS
USINAGE D'UNE PIÈCE COMPOSITE DISPOSÉE LIBREMENT À L'AIDE D'UN SYSTÈME LASER

(30) Priority: 21.04.2015 US 201514692360
(43) Date of publication of application: 26.10.2016
(73) Proprietor: Rohr, Inc., Chula Vista, CA 91910-2098 (US)
(72) Inventor: TIWARI, Sean, Glendora, CA California 91740 (US); CABRERA, Angel, Anaheim, CA California 92804 (US); GUTIERREZ, Jr., Manuel Bernal, Fontana, CA California 92335 (US); NOVAK, Charles, Moreno Valley, CA California 92557 (US)
(74) Representative: Dehns

(56) References cited:
- EP-A1- 1 342 527
- WO-A1-2014/109120
- GB-A- 2 478 312
- US-A- 4 188 544

## Description

### BACKGROUND

### 1. Technical Field

This disclosure relates generally to laser machining and, more particularly, to perforating, cutting and/or otherwise machining composite material with a laser.

### 2. Background Information

An aircraft propulsion system may include components constructed from one or more structural acoustic panels. A typical acoustic panel includes a perforated face skin (or sheet), a back skin (or sheet) and at least one layer of porous core such as a honeycomb core. The porous core is positioned and bonded between the face skin and the back skin. The core, the face skin, and the back skin together form a plurality of acoustic chambers. These acoustic chambers are open to air outside of the face skin via perforations in the face skin. The acoustic chambers may serve to damp acoustic noise by facilitating generation of out of phase sound waves that destructively interfere with noise sound waves hitting the acoustic panel.

In modern aircraft, the face skin and the back skin may each be made of composite material such as carbon fiber within an epoxy matrix. The porous core, on the other hand, may be made from metal such as aluminum and bonded to the skins with an adhesive; e.g., the epoxy matrix. Of course, one or more components of an acoustic panel may alternatively be formed from one or more materials other than those described above.

One challenge in the construction of an acoustic panel is the perforation of the face skin. Thousands to millions of through-holes, for example, may need to be formed in the face skin. Often these holes are on the order of 0.050 inches in diameter down to much smaller diameters, and 10-30% of the face skin area is removed by the perforation. Improved manufacturing methods are desired to facilitate fast, inexpensive and accurate creation of these perforations.

EP 1 342 527 A1 discloses a prior art method for laser cutting a plate material laid freely and unattached on a pallet.

WO 2014/109120 A1 discloses a prior art 3D laser processing machine.

US 4188544 A discloses a prior art method and apparatus for automatically processing a workpiece employing calibrated scanning.

### SUMMARY OF THE DISCLOSURE

According to an aspect of the invention, a manufacturing method is provided in which a composite part is freely arranged on a support surface, as claimed in claim 1.

The freely arranged composite part may be capable of sliding substantially unencumbered on the support surface.

The arranging may include disposing the composite part on the support surface relative to at least one marking on the support surface such that the composite part is in a predetermined region and/or has a predetermined orientation.

The scanning may include determining a location and/or an orientation of the freely arranged composite part.

The scanning may include determining a characteristic about a geometry of the freely arranged composite part.

The method may include comparing the determined characteristic to a predicted characteristic to provide comparison data. The command data may be provided based on the comparison data.

The machining may include forming one or more apertures in and/or cutting the freely arranged composite part.

The composite part may include reinforcement fibers within a polymeric matrix.

The guide may be disposed within the composite part.

The composite part may be disposed within the guide.

The first direction may be a lateral direction and the second direction may be a vertical direction.

The foregoing features and the operation of the invention will become more apparent in light of the following description and the accompanying drawings.

### BRIEF DESCRIPTION OF THE DRAWINGS

FIG. 1 is a block diagram of a system for machining a composite part.
FIG. 2 is a perspective illustration of a support for a composite part.
FIG. 3 is a topside illustration of a composite part arranged with a support.
FIG. 4 is a topside illustration of a composite part arranged with a support.
FIG. 5 is a perspective illustration of a composite part arranged with a support.
FIG. 6 is a block diagram of a scanner head for a laser system.
FIG. 7 is a block diagram of an optical element with galvo mirrors for the scanner head of FIG. 6.
FIG. 8 is a flow diagram of a method for manufacturing an apparatus such as an acoustic panel with a composite part.
FIG. 9 is a perspective illustration of a support for a composite part.
FIG. 10 is a topside illustration of the composite part arranged with the support of FIG. 9.
FIG. 11 is a perspective illustration of a support for a composite part.
FIG. 12 is a topside illustration of the composite part arranged with the support of FIG. 11.
FIG. 13 is a perspective illustration of another composite part arranged with a support.

### DETAILED DESCRIPTION

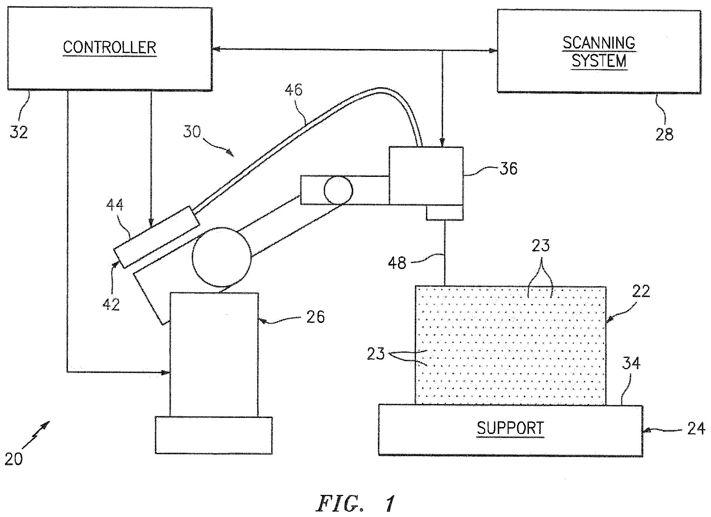

FIG. 1 is a block diagram of a system 20 for machining a composite part 22. This composite part 22 may be configured as a fiber-reinforced composite skin of an acoustic panel for an aircraft propulsion system; e.g., a turbofan or turbojet gas turbine engine. The composite part 22 may alternatively be configured as the acoustic panel itself or a partial bonded assembly thereof, which acoustic panel may include a porous (e.g., honeycomb) core sandwiched between and bonded to the skin and another skin. In the foregoing exemplary embodiments, the machining system 20 may form one or more apertures 23 (e.g., through-holes or perforations) in the skin to provide that skin with a perforated configuration; i.e., to form the skin into a perforated skin. The machining system 20 may also or alternatively cut or trim the skin and/or the entire acoustic panel / partial bonded assembly thereof. The machining system 20 of the present disclosure, however, is not limited to performing the foregoing machining operations nor to machining an acoustic panel or bonded assembly / element thereof.

Briefly, the composite part 22 has a generally tubular geometry. With this geometry, the composite part 22 may be configured as or included in an inner barrel of an inlet for the aircraft propulsion system. The composite part 22, of course, may alternatively have other geometries such as generally planar or arcuate geometries. Furthermore, the composite part 22 may be configured as or included in an apparatus other than that described above. The composite part 22, for example, may be configured as or for an inner fixed structure of the aircraft propulsion system. In another example, the composite part 22 may be configured as or for a sleeve or blocker door of a thrust reverser for the aircraft propulsion system.

The machining system 20 of FIG. 1 includes a support 24, a manipulator 26, a scanning system 28 and a laser system 30. This machining system 20 also includes a controller 32 in signal communication (e.g., hardwired or wirelessly coupled) with one or more of the machining system components 26, 28 and 30.

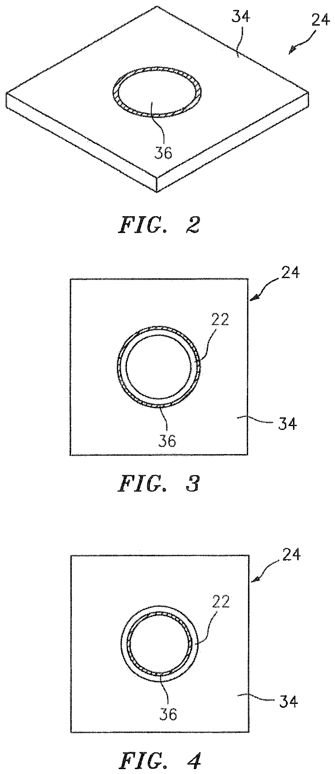

Referring to FIG. 2, the support 24 may be configured as a stationary body with a generally flat, planar support surface 34. The support 24, for example, may be a flat granite slab, a metal table, a portion of a floor or other base surface, etc. The support 24 may also be configured such that the support surface 34 is substantially horizontal with respect to gravity. With such a configuration, the force of gravity and static friction may be utilized to hold the composite part 22 (see FIG. 1) in place on the support surface 34 without requiring use of tooling such as support fixtures, clamps, pins, fasteners, harnesses, etc. Such tooling is typically used in prior art methods to precisely locate a part and/or hold the part while a machining tool such as a drill press, a CNC machine or a media blasting device subjects that part to a force during machining. The laser system 30 of the present disclosure, however, does not touch the composite part 22 during machining and therefore applies very little or relatively insignificant lateral force against the composite part 22 during the machining. If the laser system 30 features a fume collection system, no part of the fume collection system should touch the part, either, in order to avoid moving it. The composite part 22 also need not be precisely located using tooling since the composite part 22 can be located by the scanning system 28.

As described above, the composite part 22 is freely arranged on the support surface 34. For example, the composite part 22 is unattached to the support 24. It may be capable of sliding laterally substantially unencumbered on the support surface 34 if engaged with a lateral force capable of overcoming static friction. The composite part 22 may also be capable of being lifted vertically generally without restriction. Note: a composite part such as a fiber-reinforced acoustic panel may weigh between, for example, 201bs (9 kg) and 100lbs (45 kg); however, the present disclosure is not limited to the foregoing exemplary embodiment.

With the foregoing free arrangement, an individual or individuals may relatively quickly dispose the composite part 22 on the support surface 34 without needing to fix the composite part 22 to the support 24 using tooling. This may reduce set up time as well as eliminate costs associated with providing, maintaining, certifying and/or storing tooling.

Set up time may be further reduced by configuring the support 24 with at least one marking 36 at a predetermined (known) position on the support surface 34. This marking 36 may be used for generally locating and/or orienting the composite part 22 on the support surface 34 within a predetermined region and/or with a predetermined orientation. For example, the composite part 22 may be arranged within the marking 36 as illustrated in FIG. 3. The composite part 22 may be arranged around the marking 36 as illustrated in FIG. 4. The composite part 22 may also or alternatively be arranged on the marking 36. The marking 36 may be applied to the support surface 36. The marking 36 may be engraved into the support surface 34. The marking 36 may also or alternatively be displayed on the support surface 34 using, for example, a laser or another light source. Of course, in other embodiments, the support 24 may be configured without any such markings. For example, the markings 36 may also or alternatively be configured as or include one or more fiducials, also known as fiducial markers.

Referring again to FIG. 1, the manipulator 26 is adapted to move at least one component (e.g., a scanner head 36) of the laser system 30 to various locations about (e.g., around, within, next to) the composite part 22. The manipulator 26 may also be configured to move part or all of the scanning system 28. The manipulator 26 of FIG. 1, for example, is configured as a multi-axis manipulator such as a six-axis robotic arm. Of course, various other types and configurations of manipulators are known in the art, and the machining system 20 of the present disclosure is not limited to including any particular ones thereof.

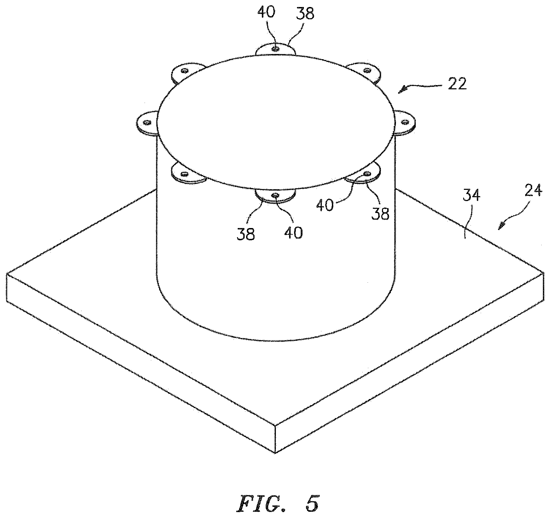

The scanning system 28 is adapted to determine location, orientation and/or geometry information about the composite part 22, which is used to provide command data. The scanning system 28, for example, may locate a feature or features on the composite part 22 such as, for example, tabs 38 and/or apertures 40 as shown in FIG. 5. By processing data indicative of the locations of at least some of the features 38, 40, the scanning system 28 may determine the location of the composite part 22 as well as the orientation of the composite part 22 relative to the machining system 20.

The scanning system 28 may also scan one or more areas of the composite part 22 to determine a characteristic about the geometry of the composite part 22. The scanning system 28, for example, may determine a coordinate of a certain point or cluster of points on the located and orientated composite part 22, which point or cluster of points may be associated with where one or more of the apertures 23 is to be formed. The scanning system 28 may compare the determined characteristic (e.g., the determined coordinate(s)) to a predicted characteristic (e.g., predicted coordinate(s) for the point or cluster or points) to provide comparison data. This comparison data may be processed with machining data to adjust the machining data for deviations in the location, geometry and/or configuration of the actual composite part 22, which processed (e.g., adjusted) machining data forms the command data. This machining data may include, among other things, commands for locating the scanner head 36 a certain distance from the composite component during the machining. Where there are no deviations between the actual part 22 and the predicted part, corresponding distances of the command data and the machining data may be equal. However, where there are deviations between the actual part 22 and the predicted part, corresponding distances of the command data and the machining data may be different to account for the deviations between the actual composite part 22 and a predicted ideal composite part.

Some or all of the data processing described above may be performed by processing device(s) configured with the scanning system 28. Alternatively, some or all of the processing may be performed by the controller 32.

The scanning system 28 may be configured as or otherwise include a non-contact scanning device such as a laser measurement device, a white light measurement device, a blue light measurement device, etc. The scanning system 28 may also or alternatively be configured as or otherwise include a contact scanning device such as a coordinate measurement machine (CMM). Of course, various other types and configurations of scanning systems are known in the art, and the scanning system 28 of the present disclosure is not limited to including any particular ones thereof.

The laser system 30 is adapted to form (ablate, cut) a plurality of the apertures 23 and/or other features in the composite part 22, which apertures 23 may be through-holes, dimples, grooves, channels, recessions, indentations, notches, etc. The laser system 30 includes a laser 42 optically coupled with the scanner head 36.

The laser 42 may be configured as an infrared (IR) laser and/or pulsed laser. The lasers may also or alternatively be configured as a fiber laser. The laser 42 of FIG. 1, for example, is configured as an infrared pulsed fiber laser. The laser 42 includes a laser beam source 44 and a length of optical fiber 46, which optically couples the laser beam source 44 with the scanner head 36.

The laser beam source 44 is adapted to generate a laser beam 48. The laser beam source 44 may be configured as or otherwise include, for example, a laser diode; e.g., an infrared laser diode.

The optical fiber 46 is adapted to respectively direct the laser beam 48 generated by the laser beam source 44 to the scanner head 36. The optical fiber 46 may be configured as, for example, a length of flexible, hollow glass fiber capable of transmitting the laser beam 48 through reflectance.

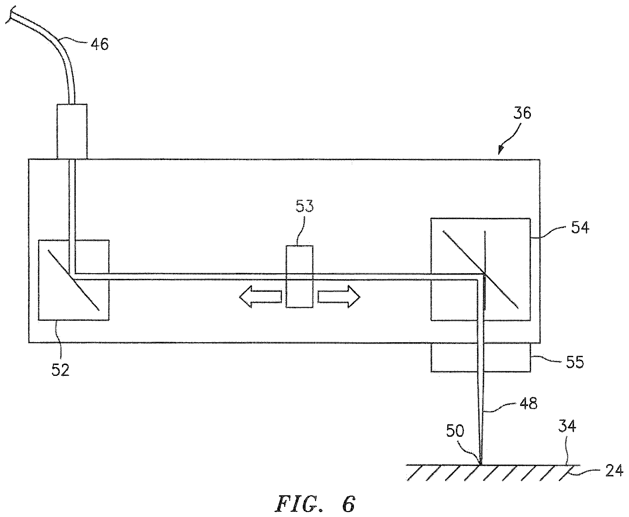

The scanner head 36 is adapted to receive the laser beam 48 from the optical fiber 46, and scan this laser beam 48 over at least a portion of the composite part 22. The scanner head 36 may also be adapted to adjust a focal length of the laser beam 48 during and/or before/after the scanning. The term "scan" may describe a process of directing a laser beam along a path over a part and/or to one or more discrete points on the part. The term "focal length" may describe a distance between the scanner head 36 and a focal point 50 (see FIG. 6) of the laser beam 48, which point is where the laser beam converges to its smallest diameters and greatest energy density, and which may be adjusted or set to be where the laser beam is incident with a part. The cutting or ablating process preferably is determined such that the composite part 22 is not excessively chemically altered or heat affected, which could cause contraction or expansion, strains and ultimately warping or other movement.

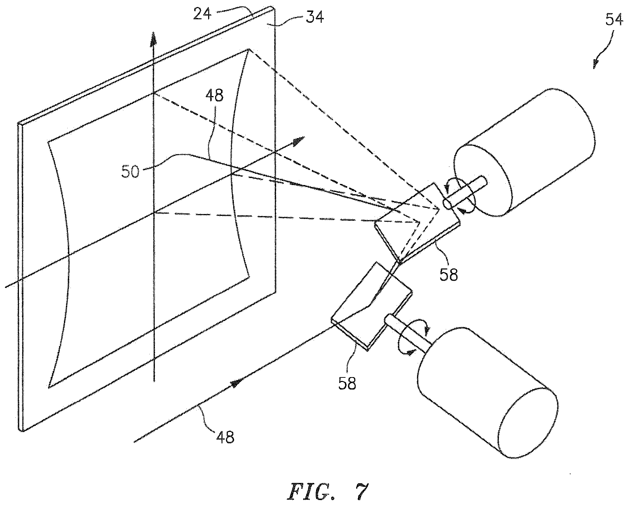

The scanner head 36 of FIG. 6 includes a plurality of optical elements 52-55. One or more of these optical elements 52-55 may each be adapted to filter, focus and/or redirect the laser beam 48. The first element 52, for example, may be configured as a bending mirror. The first element 52 is adapted to direct the laser beam 48 output from the optical fiber 46 through the second element 53 and to the third element 54. The second element 53 may be configured as a lens, which translates back and forth between the optical elements 52 and 54. The second element 53 is adapted to change a focal length of the laser beam 48. Referring to FIG. 7, the third element 54 may include one or more (e.g., single-axis) galvo mirrors 58. The third element 54 is adapted to direct the laser beam 48 through the fourth element 55 (see FIG. 6) to various points on the composite part 22 within a scan area; e.g., an area on the composite part 22 where the laser beam 48 may be directed without moving the scanner head 36. Referring again to FIG. 6, the fourth element 55 may be configured as a stationary focusing lens. The fourth element 55 is adapted to focus the laser beam 48 to the focal point 50.

Referring again to FIG. 1, the controller 32 (e.g., a processing system) is adapted to signal one or more of the system components 26, 28 and 30 to perform at least a portion of the method described below. The controller 32 may be implemented with a combination of hardware and software. The hardware may include memory and one or more single-core and/or multi-core processors. The memory may be a non-transitory computer readable medium, and adapted to store the software (e.g., program instructions) for execution by the processors. The hardware may also include analog and/or digital circuitry other than that described above.

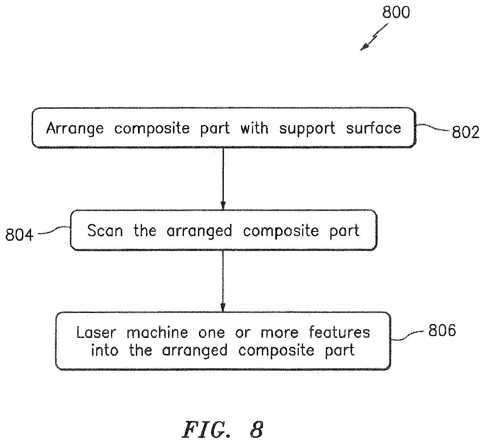

FIG. 8 is a flow diagram of an exemplary method 800 for manufacturing an apparatus such as an acoustic panel as described above. During this method 800, a composite part such as the part 22 is arranged, scanned and machined. For ease of description, the composite part 22 is described below as the skin for the acoustic panel. In such an embodiment, the porous core and the skins may be bonded together after the skin (e.g., 22) has been perforated. However, the method of the present disclosure is not limited to such an embodiment. For example, the composite part 22 may alternatively be configured as the entire bonded acoustic panel or a partial bonded assembly of the acoustic panel (e.g., the skin bonded to the porous core). Preferably, the composite part 22 is stiff enough that it completely supports the weight of its own features without sagging, bending or otherwise moving before and during the laser perforation process. The laser perforation process for a skin of an acoustic panel removes as much as 10-30% of the skin volume. The skin must be stiff enough before and after perforation to prevent any sagging or bending.

In step 802, the composite part 22 is arranged with the support surface 34. In particular, the composite part 22 is arranged freely on the support surface 34, for example, relative to the marking 36 (see FIGS. 2-4). As described above, in such a free arrangement, the force of gravity and/or static friction may be utilized to (e.g., solely) hold the composite part 22 in place on the support surface 34 without requiring use of tooling for example.

In step 804, the arranged composite part 22 is scanned using the scanning system 28 to provide command data. The scanning system 28, for example, may determine a location and/or an orientation of the composite part 22. The scanning system 28 may use the determined location and/or orientation information in conjunction with data from a scan of the composite part 22 at a point or a cluster of points to determine a characteristic about the geometry of the arranged composite part 22 at that point or cluster of points. The determined characteristic may be compared to a predicted characteristic to provide comparison data. This comparison data may be processed with predetermined machining data to provide the command data, which command data may in general be similar to the machining data except for including adjustments to account for deviations between the actual scanned part and a theoretical ideal part model.

In step 806, one or more features are machined into the arranged composite part 22 using the laser system 30. Operating based on the command data, for example, the manipulator 26 may move the scanner head 36 to a certain position relative to the arranged composite part 22. The laser system 30 may subsequently direct the laser beam 48 against the composite part 22 to ablate a portion of the composite part material and form an aperture 23; e.g., a perforation. This step 806 may then be partially and/or fully repeated one or more times in order to perforate the composite part 22; e.g., the acoustic panel skin. The laser system 30 may also or alternatively be used to cut or trim the composite part 22 and/or form any other type of feature into the composite part 22. Preferably, the laser system 30 will not touch and will not move the composite part 22 during these operations.

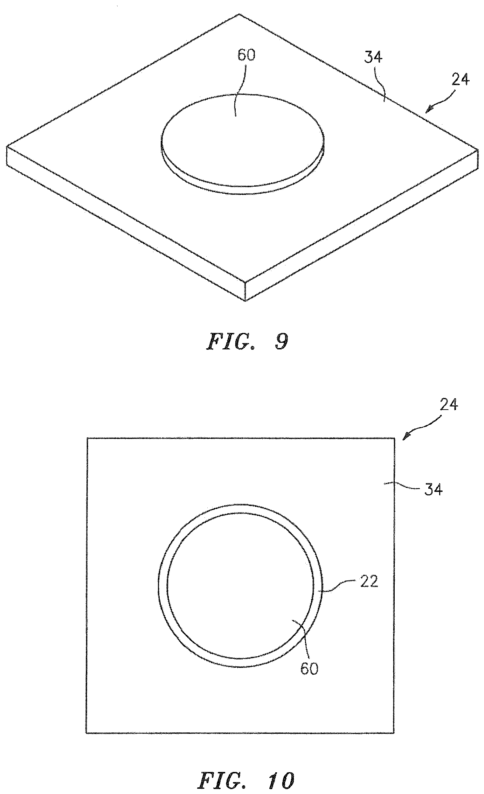

Referring to FIGS. 9-12, in some embodiments, the support 24 may be configured with at least one guide 60. This guide 60 may be a protrusion which projects out from the support surface 34 as illustrated in FIGS. 9-12. Alternatively, the guide 60 may be an aperture (e.g., a recession or channel) that extends into the support 24 from the support surface 34.

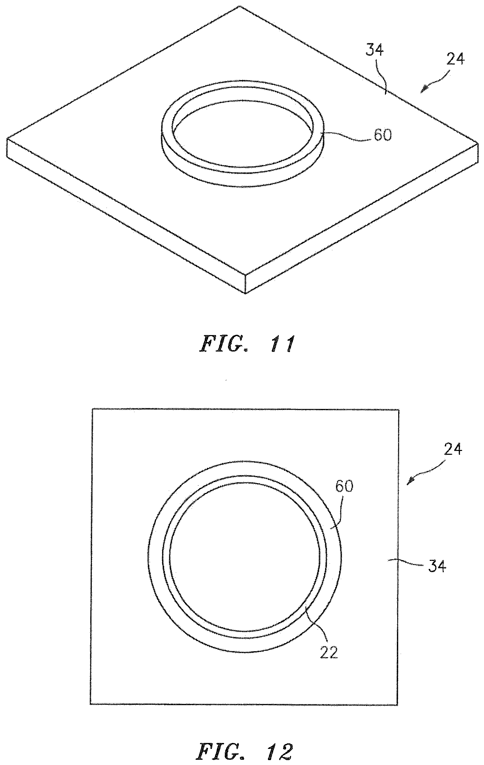

The guide 60 is configured to limit (e.g., significantly reduce or substantially prevent) movement of the composite part 22 in at least a first (e.g., lateral) direction while the part 22 is arranged with the guide 60 on the support surface 34. The guide 60, for example, may be disposed within and laterally abutted against the composite part 22 as illustrated in FIG. 10; see also FIG. 9. In another example, the composite part 22 may be disposed within and abutted against the guide 60 as illustrated in FIG. 12; see also FIG. 11. While the guide 60 limits movement in the first (e.g., lateral) direction, the guide 60 allows for movement of the composite part 22 in a second (e.g., vertical) direction. This enables an individual or individuals to relatively quickly arrange the composite part 22 with the support 24 at a predetermined location and/or with a predetermined orientation. The guide 60 may also serve to provide structure to the composite part 22 during machining. Such structure may be useful where, for example, the composite part 22 could potentially otherwise shift and/or deform as material is removed therefrom. However, similar to the freely arranged embodiment discussed above, no fixtures are required to hold or attached the composite part 22 to the support 24.

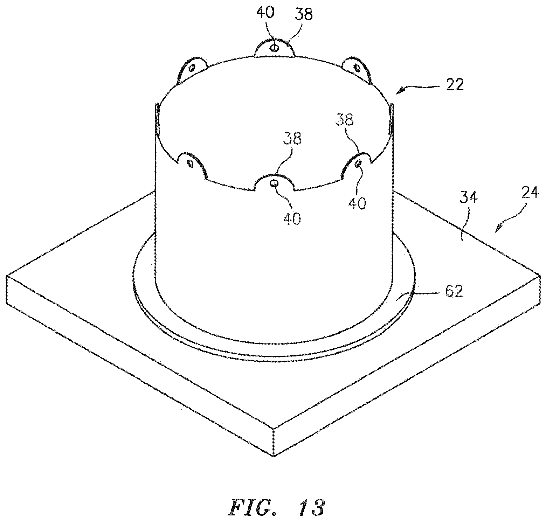

Referring to FIG. 13, in some embodiments, the composite part 22 may be configured with a flange (e.g., an annular flange) at an end thereof which engages the support surface 34. Such a flange 62 may provide rigidity to the composite part 22 as well as further support for keeping the part 22 stable on the support surface 34.

The foregoing disclosure generally describes the composite part 22 as being arranged by itself on the support surface 34. However, in some embodiments, the composite part 22 may include its own support structure such as, for example, a cap, an internal frame and/or a base. Such a support structure may be configured to maintain the composite part 22 in a certain geometry and/or configuration. Similar to the disclosure above, however, neither the supported composite part 22 nor the support structure are fixedly attached to the support 24. Rather, the supported composite part 22 is freely arranged on the support surface 34. Alternatively, the supported composite part 22 may be arranged with the guide 60 on the support surface 34 and thereby partially (e.g., laterally but not vertically) constrained as described above.

In some embodiments, the composite part 22 may be formed of or otherwise include fiber reinforcement within a polymeric matrix. The fiber reinforcement may include, but is not limited to, fiberglass, carbon fibers, Aramid fibers (e.g., Kevlar® fibers), etc. The polymeric matrix may include epoxy resin or any other suitable thermoset or thermoplastic material. Of course, the composite part 22 of the present disclosure is not limited to being formed of or including any particular composite materials.

While various embodiments of the present invention have been disclosed, it will be apparent to those of ordinary skill in the art that many more embodiments and implementations are possible within the scope of the appended claims. For example, the present invention as described herein includes several aspects and embodiments that include particular features. Although these features may be described individually, it is within the scope of the present invention that some or all of these features may be combined with any one of the aspects and remain within the scope of the appended claims.

## Claims

1. A manufacturing method, comprising:
arranging a part (22) freely on a support surface (34) wherein the part (22) is a composite part and has a tubular body and is configured as a skin of an acoustic panel for an aircraft propulsion system wherein the freely arranged composite part (22) is unattached to the support surface (34);
scanning the freely arranged composite part (22) using a scanning system (28) to provide command data; and
machining the freely arranged part (22) based on the command data;
wherein the freely arranged part (22) is machined using a laser (42) in the machining step and the machining comprises perforating the skin.

2. The manufacturing method of claim 1, wherein the freely arranged composite part (22) is capable of sliding substantially unencumbered on the support surface (34).

3. The manufacturing method of claim 1 or 2, wherein the arranging comprises disposing the composite part (22) on the support surface (34) relative to a marking (36) on the support surface (34) such that the composite part (22) is in a predetermined region and/or has a predetermined orientation.

4. The manufacturing method of any preceding claim, wherein the scanning comprises determining a location and/or an orientation of the freely arranged composite part (22).

5. The manufacturing method of any preceding claim, wherein the scanning comprises determining a characteristic about a geometry of the freely arranged composite part (22).

6. The manufacturing method of claim 5, further comprising comparing the determined characteristic to a predicted characteristic to provide comparison data, wherein the command data is provided based on the comparison data.

7. The manufacturing method of any preceding claim, wherein the machining comprises forming one or more apertures (40) in the freely arranged composite part (22).

8. The manufacturing method of any preceding claim, wherein the machining comprises cutting the freely arranged composite part (22).

9. The manufacturing method of any preceding claim, wherein the composite part (22) comprises reinforcement fibers within a polymeric matrix.

10. The manufacturing method of claim 1, wherein:
the composite part (22) is arranged with a guide on the support surface, wherein the guide (60) is configured to limit movement of the arranged composite part (22) in a first direction while allowing movement of the arranged composite part (22) in a second direction; and
the machining comprises ablating the arranged composite part (22) using a laser (42) based on the command data.

11. The manufacturing method of claim 10, wherein the guide (60) is disposed within the composite part (22).

12. The manufacturing method of claim 10 or 11, wherein the first direction is a lateral direction and the second direction is a vertical direction.

## Patentansprüche

1. Herstellungsverfahren, das Folgendes umfasst:
freies Anordnen eine Teils (22) auf einer Trägerfläche (34), wobei das Teil (22) ein Verbundteil ist und einen rohrförmigen Körper aufweist und als eine Haut einer Schallwand für eine Flugzeugantriebssystem konfiguriert ist, wobei das frei angeordnete Verbundteil (22) nicht an der Trägerfläche (34) befestigt ist;
Scannen des frei angeordneten Verbundteils (22) mithilfe eines Scan-Systems (28), um Befehlsdaten bereitzustellen; und
Bearbeiten des frei angeordneten Teils (22) auf Grundlage der Befehlsdaten;
wobei das frei angeordnete Teil (22) mithilfe eines Lasers (42) in dem Schritt des Bearbeitens bearbeitet wird und das Bearbeiten ein Perforieren der Haut umfasst.

2. Herstellungsverfahren nach Anspruch 1, wobei das frei angeordnete Verbundteil (22) dazu in der Lage ist, im Wesentlichen unbelastet auf der Trägerfläche (34) zu gleiten.

3. Herstellungsverfahren nach Anspruch 1 oder 2, wobei das Anordnen ein Einrichten des Verbundteils (22) auf der Trägerfläche (34) relativ zu einer Markierung (36) auf der Trägerfläche (34) umfasst, sodass das Verbundteil (22) sich in einem vorbestimmten Bereich befindet und/oder eine vorbestimmte Ausrichtung aufweist.

4. Herstellungsverfahren nach einem der vorhergehenden Ansprüche, wobei das Scannen ein Bestimmen eines Standorts und/oder einer Ausrichtung des frei angeordneten Verbundteils (22) umfasst.

5. Herstellungsverfahren nach einem der vorhergehenden Ansprüche, wobei das Scannen ein Bestimmen einer Eigenschaft hinsichtlich einer Geometrie des frei angeordneten Verbundteils (22) umfasst.

6. Herstellungsverfahren nach Anspruch 5, ferner umfassend ein Vergleichen der bestimmten Eigenschaft mit einer vorhergesagten Eigenschaft, um Vergleichsdaten bereitzustellen, wobei die Befehlsdaten auf Grundlage der Vergleichsdaten bereitgestellt werden.

7. Herstellungsverfahren nach einem der vorhergehenden Ansprüche, wobei das Bearbeiten ein Bilden von einer oder mehreren Aperturen (40) in dem frei angeordneten Verbundteil (22) umfasst.

8. Herstellungsverfahren nach einem der vorhergehenden Ansprüche, wobei das Bearbeiten ein Schneiden des frei angeordneten Verbundteils (22) umfasst.

9. Herstellungsverfahren nach einem der vorhergehenden Ansprüche, wobei das Verbundteil (22) Verstärkungsfasern innerhalb einer Polymermatrix umfasst.

10. Herstellungsverfahren nach Anspruch 1, wobei:
das Verbundteil (22) mit einer Führung auf der Trägerfläche angeordnet ist, wobei die Führung (60) dazu konfiguriert ist, eine Bewegung des angeordneten Verbundteils (22) in eine erste Richtung zu begrenzen, während es eine Bewegung des angeordneten Verbundteils (22) in eine zweite Richtung ermöglicht; und
das Bearbeiten ein Abtragen des angeordneten Verbundteils (22) mithilfe eines Lasers (42) auf Grundlage der Befehlsdaten umfasst.

11. Herstellungsverfahren nach Anspruch 10, wobei die Führung (60) innerhalb des Verbundteils (22) eingerichtet ist.

12. Herstellungsverfahren nach Anspruch 10 oder 11, wobei die erste Richtung eine seitliche Richtung ist und die zweite Richtung eine vertikale Richtung ist.

## Revendications

1. Procédé de fabrication, comprenant :
la disposition libre d'une pièce (22) sur une surface de support (34) dans lequel la pièce (22) est une pièce composite et a un corps tubulaire et est conçue comme une enveloppe d'un panneau acoustique pour un système de propulsion d'aéronef dans lequel la pièce composite disposée librement (22) n'est pas attachée à la surface de support (34) ;
le balayage de la pièce composite disposée librement (22) à l'aide d'un système de balayage (28) pour fournir des données de commande ; et
l'usinage de la pièce disposée librement (22) sur la base des données de commande ;
dans lequel la pièce disposée librement (22) est usinée à l'aide d'un laser (42) à l'étape d'usinage, l'usinage comprend la perforation de l'enveloppe.

2. Procédé de fabrication selon la revendication 1, dans lequel la pièce composite disposée librement (22) est capable de glisser sensiblement sans encombrement sur la surface de support (34).

3. Procédé de fabrication selon la revendication 1 ou 2, dans lequel la disposition comprend l'agencement de la pièce composite (22) sur la surface de support (34) par rapport à un marquage (36) sur la surface de support (34) de sorte que la pièce composite (22) est dans une région prédéterminée et/ou a une orientation prédéterminée.

4. Procédé de fabrication selon une quelconque revendication précédente, dans lequel le balayage comprend la détermination d'un emplacement et/ou d'une orientation de la pièce composite disposée librement (22).

5. Procédé de fabrication selon une quelconque revendication précédente, dans lequel le balayage comprend la détermination d'une caractéristique concernant une géométrie de la pièce composite disposée librement (22).

6. Procédé de fabrication selon la revendication 5, comprenant en outre la comparaison de la caractéristique déterminée avec une caractéristique prédite pour fournir des données de comparaison, dans lequel les données de commande sont fournies sur la base des données de comparaison.

7. Procédé de fabrication selon une quelconque revendication précédente, dans lequel l'usinage comprend la formation d'une ou de plusieurs ouvertures (40) dans la pièce composite disposée librement (22).

8. Procédé de fabrication selon une quelconque revendication précédente, dans lequel l'usinage comprend la découpe de la pièce composite disposée librement (22).

9. Procédé de fabrication selon une quelconque revendication précédente, dans lequel la pièce composite (22) comprend des fibres de renforcement à l'intérieur d'une matrice polymère.

10. Procédé de fabrication selon la revendication 1, dans lequel :
la pièce composite (22) est disposée avec un guide sur la surface de support, dans lequel le guide (60) est conçu pour limiter le déplacement de la pièce composite disposée (22) dans une première direction tout en permettant le déplacement de la pièce composite disposée (22) dans une seconde direction ; et
l'usinage comprend l'ablation de la pièce composite disposée (22) à l'aide d'un laser (42) sur la base des données de commande.

11. Procédé de fabrication selon la revendication 10, dans lequel le guide (60) est agencé à l'intérieur de la pièce composite (22).

12. Procédé de fabrication selon la revendication 10 ou 11, dans lequel la première direction est une direction latérale et la seconde direction est une direction verticale.
